# EUROPÄISCHE PATENTANMELDUNG

(11) **EP 2 453 197 A1**
(43) Veröffentlichungstag der Anmeldung: **16.05.2012**
(21) Anmeldenummer: 10190937.2
(22) Anmeldetag: 12.11.2010
(51) Int. Cl.: F41B 7/00, G01N 3/307

(54) **Vorrichtung zum definierten Beschleunigen eines Projektils**

(71) Anmelder: Saint-Gobain Glass France, 92400 Courbevoie (FR)
(72) Erfinder: Moreau, Aurore, 52134, Herzogenrath (DE); Kremers, Stephan, 52525, Heinsberg (DE); Goffin, Ingo, 52134, Herzogenrath (DE)
(74) Vertreter: Lendvai, Tomas

(57) **Zusammenfassung**

Vorrichtung zum definierten Beschleunigen eines Projektils, mit mindestens einem Hohlkörper (3) mit einer durchgehend verbundenen Justierkammer (12) und einer Projektilkammer (10) wobei,
a. die Justierkammer (12) einen Justagezylinder (4) mit einem Endstück (2) und einer am Endstück (2) befestigten Justierschraube (1) mit Schraubgewinde (11) sowie einen beweglich angeordneten Justageblock (5) innerhalb des Justagezylinders (4) aufweist,
b. die Projektilkammer (10) eine Projektilhalterung (7) mit Projektil (8), einen Stopper (9) mit Hohlraum sowie einen beweglichen Entlastungsstift (13) aufweist, und

die Projektilhalterung (7) und der Justageblock (5) durch eine Feder (6) verbunden sind.

## Beschreibung

Die Erfindung betrifft eine Vorrichtung zum definierten Beschleunigen eines Projektils und deren Verwendung.

Trotz seiner hohen Oberflächenhärte ist Glas ein oft spröder und häufig leicht zerbrechlicher Werkstoff. In vielen Fällen wird Glas jedoch in sicherheitsrelevanten Bereichen eingesetzt. Zum Überprüfen der Materialeigenschaften, insbesondere der Beständigkeit von Glas kommen eine Vielzahl von Testverfahren zum Einsatz. Ein wichtiges Kriterium kann beispielsweise die Stabilität einer Glasscheibe gegenüber auftreffenden kleinen Gegenständen sein. Dies können kleine Steine sein, die während der Fahrt auf die Windschutzscheibe eines Fahrzeuges, Flugzeuges oder Eisenbahn treffen. In Abhängigkeit von ihrem Gewicht und der Eigengeschwindigkeit können daraus größere Schäden oder eine zerbrochene Scheibe resultieren. Die Stabilität einer Scheibe wird in der Regel mit Hilfe von Kugelfalltests überprüft. Hierzu werden Stahlkugeln mit bekannten Durchmessern und Gewichten aus einer bekannten Höhe auf eine Scheibe fallen gelassen. Aus dem entstehenden Bruchbild oder auch der Abwesenheit eines solchen, lassen sich Rückschlüsse auf die Stabilität der Scheibe ziehen. Diese einfachen Kugelfalltests lassen sich jedoch nicht auf alle möglichen Gefahrensituationen übertragen. Insbesondere bei dem genannten Steinschlag weisen die Steine häufig eine hohe Geschwindigkeit und damit hohe kinetische Energie auf. Die beim Aufprall freiwerdende Energie bewirkt häufig eine ernsthafte Beschädigung der Scheibe.

Eine Abschätzung der Stabilität und Beständigkeit einer Scheibe lässt sich jedoch nur bei genau definierten Versuchsbedingungen vornehmen. Insbesondere die Abschätzung der Geschwindigkeit und Beschleunigung des Testprojektils ist in der Praxis häufig sehr schwierig. Aufgrund des niedrigen Eigengewichtes des Projektils reichen einfache Kugelfallexperimente nicht aus, um die erforderliche Geschwindigkeit und kinetische Energie beim Aufprall bereitzustellen. Das Projektil muss durch weitere mechanische Elemente wie Spiralen oder Gummis beschleunigt werden. Auch in diesen Fällen ist eine genaue und reproduzierbare Einstellung der kinetischen Energie des Projektils schwierig. Durch den Einsatz von Lichtschranken oder CCD-Kameras lässt sich zwar die Geschwindigkeit und damit die kinetische Energie eines Projektils recht genau bestimmen. In vielen Fällen weichen die Ergebnisse der kinetischen Energie jedoch zwischen den einzelnen Messungen stark voneinander ab.

DE 36 07 738 C1 offenbart eine Einrichtung zum Ausbessern von Windschutzscheiben aus mehrschichtigen Sicherheitsglas.

US2002014778 A1 offenbart ein Verfahren zum Schutz von Windschutzscheiben eines Kraftfahrzeuges vor Steinschlag. Die Schutzwirkung wird durch eine resistente Barriere im Randbereich der Scheibe erzeugt.

GB552544 A offenbart eine Vorrichtung zum Testen von Glasflaschen. Die Vorrichtung erlaubt eine Bewegung der Flasche in definierten Bahnen und den Abwurf von Gewichten auf die zu testende Glasflasche.

Die Aufgabe der Erfindung liegt darin, eine Vorrichtung und ein Verfahren bereitzustellen, welche einen reproduzierbaren Beschuss einer Glasscheibe mit einem geeigneten Testprojektil ermöglicht.

Die Aufgabe der vorliegenden Erfindung wird erfindungsgemäß durch den unabhängigen Anspruch 1 gelöst. Bevorzugte Ausführungen gehen aus den Unteransprüchen hervor.

Ein erfindungsgemäßes Verfahren zur Glasbruchprüfung und die erfindungsgemäße Verwendung der Vorrichtung gehen aus weiteren nebengeordneten Ansprüchen hervor.

Die erfindungsgemäße Vorrichtung zum definierten Beschleunigen eines Projektils umfasst mindestens einen Hohlkörper. Der Hohlkörper kann aus einem Werkstück gefertigt sein oder aus mehren Werkstücken zusammengesetzt sein. Der im Hohlkörper befindliche Hohlraum wird von einer durchgehend verbundenen Justierkammer und einer Projektilkammer gebildet. Die Justierkammer und die Projektilkammer sind durchgehend miteinander verbunden und weisen jeweils bevorzugt kreisförmigen, Durchmesser auf. Der Durchmesser der Projektilkammer ist bevorzugt mindestens 30 % kleiner als der Durchmesser der Justierkammer. Die Justierkammer enthält einen Justagezylinder mit einem Endstück und einer am Endstück befestigten Justierschraube mit Schraubgewinde. Mit Hilfe der Justierschraube lässt sich die Position des Justagezylinders in der Justierkammer entlang der innerhalb des Hohlraums verlaufenden gedachten Mittelachse variieren. Der Justagezylinder enthält einen beweglich angeordneten Justageblock. Die mit der Justierkammer verbundene Projektilkammer enthält eine Projektilhalterung mit Projektil sowie einen Stopper mit Hohlraum der nur für das Projektil aber nicht für die Projektilhalterung durchlässig ist. Die Projektilhalterung und der Justageblock sind durch eine mechanische Feder gespannt verbunden. Sobald der an der Projektilhalterung befindliche, bewegliche Entlastungsstift entfernt ist, geht die Feder vom gespannten Zustand in den entspannten Zustand über. Die dabei freiwerdende potentielle Energie bewirkt eine Beschleunigung der Projektilhalterung und des darin befindlichen Projektils. Das Projektil kann die Projektilkammer und den Hohlkörper entgegengesetzt zur Justierkammer verlassen, während der Projektilhalter am Stopper zurückgehalten wird. Der Stopper verhindert somit eine vollständige Entspannung der zwischen der Projektilhalterung und der durch Einstellung fixierten Justagezylinders befindlichen Feder oder Spirale. Die Kontaktflächen zwischen der Projektilhalterung und der Innenwand der Projektilkammer enthalten bevorzugt eine Beschichtung eines niedrigviskosen Öls, bevorzugt kleiner als 10 mPa*s. Die Justierkammer, die Projektilkammer, Justagezylinder und der Justageblock weisen bevorzugt einen im Querschnitt kreisförmigen Durchmesser auf. Die erfindungsgemäße Vorrichtung ermöglicht eine konstante kinetische Energie des Projektils bei allen Untersuchungsreihen.

Der Justageblock umfasst bevorzugt einen am Justageblock befestigten Griff. Der Hohlkörper, die Justierkammer und der Justagezylinder enthalten bevorzugt eine schlitzförmige Öffnung, welche von außerhalb des Hohlkörpers ein Verschieben des Justageblocks über den am Justageblock befestigten Griff ermöglicht.

Der Justagezylinder weist bevorzugt einen Schlitz und mit dem Schlitz verbundene Einkerbungen auf. Die Einkerbungen ermöglichen ein fixieren des am Justageblocks befestigten Griffs. Über die Einkerbungen lässt sich die Position des Justageblocks innerhalb des Justagezylinders festlegen.

Der Hohlkörper, Justagezylinder und/oder Justageblock enthalten bevorzugt ein Metall, bevorzugt Aluminium, Titan, Eisen, Chrom, Vanadium, Kobalt, Nickel, Wolfram und/oder Legierungen davon. In einer alternativen Ausgestaltung ist der Hohlkörper aus zwei halbgeöffneten Körpern zusammengesetzt.

Der Hohlkörper oder Justageblock enthalten bevorzugt ein Polymer, bevorzugt Polyethylen, Polypropylen, Polystyrol, Polyurethane, Polymethylmetacrylate, Polyacrylate, Polyester, Polyamide, Polyethylenterephthalat und/oder Gemische oder Copolymere davon, besonders bevorzugt Polycarbontblends wie Polycarbobnat/Polyethylenterephthalat; Polycarbonat/Acrylnitril-Butadien-Styrol; Polycarbonat/Polybutylenterephthalat.

Die Feder enthält bevorzugt ein Metall, besonders bevorzugt Aluminium, Titan, Eisen, Chrom, Vanadium, Kobalt, Nickel, Wolfram und/oder Legierungen davon, sowie insbesondere bevorzugt Klavierdraht.

Die Feder weist bevorzugt eine Federkonstante einen Wert von 5 N/m bis 100 N/m, bevorzugt 10 N/m bis 50 N/m, auf. Über unterschiedliche Federn mit entsprechenden Federkonstanten lässt sich die auf das Projektil wirkende Kraft weiter einstellen. Die Feder überträgt gemäß dem Hook'schen Gesetz eine Kraft F = -kΔX, wobei k der Federkonstanten und ΔX der Auslenkung aus der Gleichgewichtslage entsprechen. Das Hook'sche Gesetz erlaubt insbesondere bei kleineren Auslenkungen der Feder eine recht präzise Berechnung der auf das Projektil wirkenden Kraft.

Die Projektilhalterung, der Stopper und der Entlastungsstift enthalten bevorzugt ein Polymer, besonders bevorzugt Polyethylen, Polypropylen, Polystyrol, Polyurethane, Polymethylmetacrylate, Polyacrylate, Polyester, Polyamide, Polyethylenterephthalat und/oder Gemische oder Copolymere davon, insbesondere bevorzugt Polycarbonatblends wie Polycarbonat/Polyethylenterephthalat; Polycarbonat/AcrylnitrilButadien-Styrol; Polycarbonat/Polybutylenterephthalat.

Die Justierkammer weist bevorzugt einen Durchmesser von 0,2 cm bis 10 cm, besonders bevorzugt von 0,5 cm bis 5 cm auf.

Die Projektilkammer weist bevorzugt einen Durchmesser von 0,1 cm bis 3 cm, besonders bevorzugt von 0,5 cm bis 2 cm auf.

Das Projektil weist bevorzugt einen konischen, zylinderförmigen oder kugelförmigen Grundkörper auf. Die Form des Grundkörpers entspricht bevorzugt der Form des Innenraums der Projektilkammer.

Das Projektil weist bevorzugt ein Gewicht von 1 g bis 10 g, bevorzugt 2 g bis 5 g auf.

Die Erfindung umfasst des Weiteren eine Vorrichtung zum Testen der Bruchbeständigkeit von Glas. Dazu wird eine wie oben beschriebene Vorrichtung aus Hohlkörper mit im Hohlraum befindlichen, durchgehend verbundenen Justierkammer und Projektilkammer in ein Stativ über eine Stativbefestigung eingespannt. Senkrecht zur Vorrichtung wird die zu untersuchende Scheibe platziert. Die Scheibe wird bevorzugt über Scheibenhalterungen fixiert. Nach Lösen des Sicherungsstiftes fliegt das Projektil mit definierter und reproduzierbarer kinetischer Energie auf die zu testende Scheibe.

In einer alternativen Ausführungsform wird die erfindungsgemäße Vorrichtung tragbar zum definierten Beschuss einer Scheibe verwendet. Die Vorrichtung enthält bevorzugt einen Handtragegriff.

Die Erfindung umfasst des Weiteren ein Verfahren zur Glasbruchprüfung und zum Beschuss von Glas mit Projektilen definierter kinetischer Energie. Dazu wird die erfindungsgemäße Vorrichtung auf eine Glasscheibe ausgerichtet, bevorzugt in einem Abstand von 1 mm bis 5 mm zur Glasscheibe. Das Ausrichten erfolgt bevorzugt per Hand. Im folgenden Schritt werden über die Position des Justagezylinders und Justageblocks eine Spannung und damit Energie in der Feder voreingestellt. Im abschließenden Schritt wird durch das Entfernen des Entlastungsstiftes die eingestellte Energie auf das Projektil übertragen und das Projektil mit definierter Energie auf die Scheibe befördert.

Die Erfindung umfasst des Weiteren die Verwendung der Vorrichtung zum definierten Beschuss von Glas, bevorzugt als Glasbruchprüfung.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.

Es zeigen:
Figur 1 einen Querschnitt der erfindungsgemäßen Vorrichtung,
Figur 2 eine schematische Draufsicht einer bevorzugten Ausführungsform des Justagezylinders,
Figur 3 einen Querschnitt der erfindungsgemäßen Vorrichtung mit gespannter Feder und einen Querschnitt der erfindungsgemäßen Vorrichtung mit entspannter Feder und
Figur 4 eine schematische Darstellung der erfindungsgemäßen Vorrichtung zum Testen der Bruchbeständigkeit von Glasscheiben.

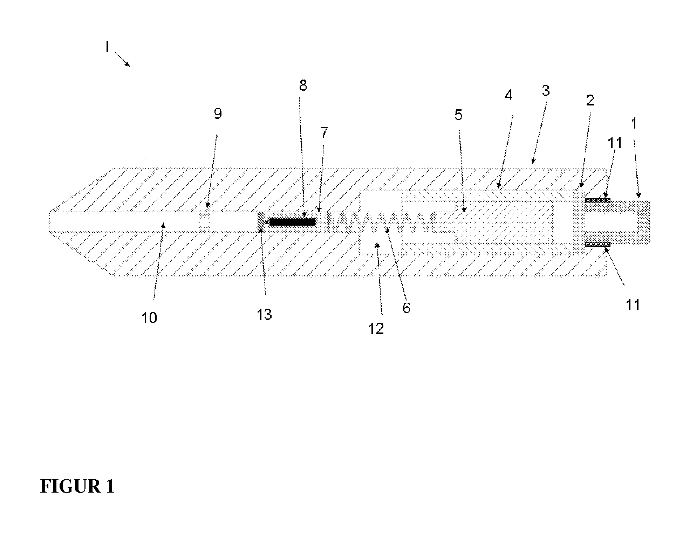

Figur 1 zeigt einen Querschnitt der erfindungsgemäßen Vorrichtung (I). Innerhalb des Hohlkörpers (3) befinden sich miteinander verbunden die Projektilkammer (10) und Justierkammer (12). Die Justierkammer (12) enthält einen Justagezylinder (4) mit einem Endstück (2) und einer am Endstück (2) befestigten Justierschraube (1) mit Schraubgewinde (11). Mit Hilfe der Justierschraube (1) lässt sich die Position des Justagezylinders (4) in der Justierkammer (12) entlang der innerhalb des Hohlraums verlaufenden gedachten Mittelachse variieren. Der Justagezylinder (4) enthält einen beweglich angeordneten Justageblock (5). Der Justageblock (5) umfasst einen am Justageblock (5) befestigten, nicht gezeigten, Griff (5a). Die mit der Justierkammer (12) verbundene Projektilkammer (10) enthält eine Projektilhalterung (7) mit Projektil (8) sowie einen Stopper (9) mit Hohlraum, der nur für das Projektil (8) aber nicht für die Projektilhalterung (7) durchlässig ist. Die Projektilhalterung (7) und der Justageblock (5) sind durch eine Feder (6) gespannt verbunden. Benachbart zu der Projektilhalterung (7) befindet sich ein beweglicher Entlastungsstift (13). Wird der Entlastungsstift (13) entfernt, so entspannt sich die Feder (6) und gibt die freiwerdende Energie an die Projektilhalterung (7) und das Projektil (8) weiter.

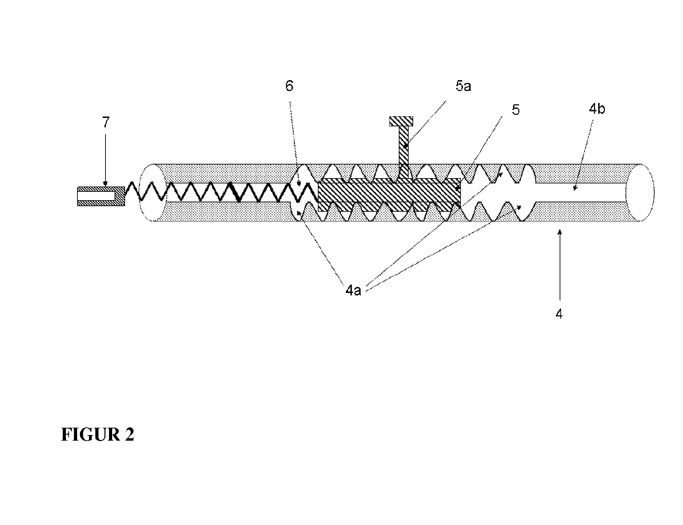

Figur 2 zeigt eine schematische Darstellung einer bevorzugten Ausführungsform des Justagezylinders (4). Innerhalb des Justagezylinders (4) ist ein Justageblock (5) beweglich gelagert. Der Justageblock (5) hat bevorzugt eine zylinderförmige Form und umfasst bevorzugt einen am Justageblock (5) befestigten Griff (5a). Der Justagezylinder (4) weist einen Schlitz (4b) auf, welcher von außerhalb des Justagezylinders (4) ein Verschieben des Justageblocks (5) über den am Justageblock (5) befestigten Griff (5a) ermöglicht. Der Justagezylinder (4) weist mit dem Schlitz (4b) verbundene Einkerbungen (4a) auf. Die Einkerbungen (4a) ermöglichen ein fixieren des am Justageblocks (5) befestigten Griffs (5a). Über die Einkerbungen (4a) lässt sich die Position des Justageblocks (5) innerhalb des Justagezylinders (4) festlegen. Über die Position des Justageblocks (5) wird die Dehnung der Feder (6) und damit die auf die Projektilhalterung (7) wirkende Kraft geregelt.

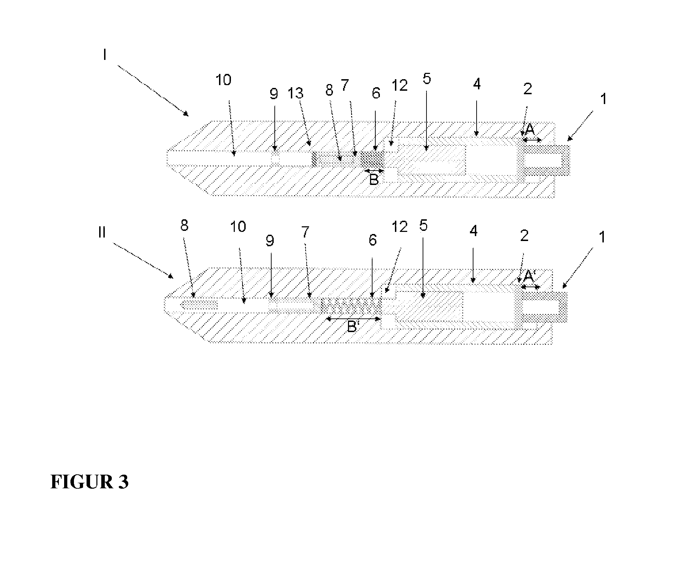

Figur 3 zeigt einen Querschnitt der erfindungsgemäßen Vorrichtung mit gespannter Feder (I) im Vergleich mit einem Querschnitt der erfindungsgemäßen Vorrichtung mit entspannter Feder (II). Der Aufbau der erfindungsgemäßen Vorrichtung (I, II) entspricht dem in Figur 1 beschriebenen. Die Vorrichtung (I) zeigt die gespannte Feder (6) als Länge B, die Vorrichtung (II) zeigt die entspannte Feder (6) als Länge B'. Die Länge B' ist größer als B in der Vorrichtung (I) mit gespannter Feder (6). Die gezeigten Längen A und A' geben die Verschiebung des Justagezylinders (4) innerhalb der Justagekammer (12) an. Die auf die Feder (6) übertragene Kraft ergibt sich aus der Position des Justageblocks (5) und somit der Länge B/B' und der Position des Justagezylinders (4) innerhalb der Justierkammer (12) über die Länge A/A'.

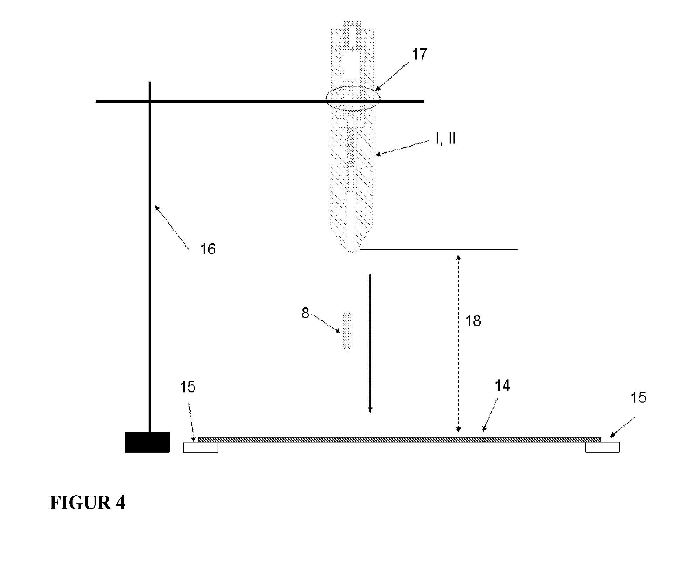

Figur 4 zeigt eine schematische Darstellung der erfindungsgemäßen Vorrichtung zum Testen der Bruchbeständigkeit von Glasscheiben. Wie oben beschrieben, wird eine erfindungsgemäße Vorrichtung (I, II) in ein Stativ (16) über eine Stativbefestigung (17) eingespannt. Senkrecht zur Vorrichtung (I, II) wird die zu untersuchende Scheibe (14) platziert. Die Scheibe (14) wird bevorzugt über Scheibenhalterungen (15) fixiert. Nach Lösen des nicht gezeigten Entlastungsstifts (13) fliegt das Projektil (8) über einen definierten Abstand (18) mit definierter und reproduzierbarer kinetischer Energie auf die zu testende Scheibe (14).

### Bezugszeichenliste

- (1): Justierschraube
- (2): Endstück
- (3): Hohlkörper
- (4): Justagezylinder
- (4a): Einkerbungen
- (4b): Schlitz
- (5): Justageblock
- (5a): Griff
- (6): Feder
- (7): Projektilhalter
- (8): Projektil
- (9): Stopper
- (10): Projektilkammer
- (11): Gewinde
- (12): Justierkammer
- (13): Entlastungsstift
- (14): Scheibe
- (15): Scheibenhalterung
- (16): Stativ
- (17): Stativbefestigung
- (18): Abstand zwischen der erfindungsgemäßen Vorrichtung (I, II) und der Scheibe
- (I): erfindungsgemäße Vorrichtung (I) mit gespannter Feder (6)
- (II): erfindungsgemäße Vorrichtung mit entspannter Feder (6)
- (A, A'): Abstand des Endstückes (2) zum Justagezylinder (4)
- (B,B'): Länge der Feder (6)

## Patentansprüche

1. Vorrichtung zum definierten Beschleunigen eines Projektils, mit mindestens einem Hohlkörper (3) der in Beschleunigungsrichtung hintereinander eine Justierkammer (12) und eine Projektilkammer (10) aufweist und
a. die Justierkammer (12) einen Justagezylinder (4) mit einem Endstück (2) und einer am Endstück (2) befestigten Justierschraube (1) mit Schraubgewinde (11) sowie einen beweglich angeordneten Justageblock (5) zur Anspannung einer Feder (6) innerhalb des Justagezylinders (4) aufweist,
b. die Projektilkammer (10), in Beschleunigungsrichtung vor der Justierkammer (12) angeordnet, zum Ausstoßen eines Projektils (8) eine Projektilhalterung (7) mit dem Projektil (8), einen Stopper (9) mit Hohlraum sowie einen beweglichen Entlastungsstift (13) aufweist, und die Projektilhalterung (7) in der Projektilkammer (10) und der Justageblock (5) in der Justierkammer (12) durch die Feder (6) miteinander verbunden sind.

2. Vorrichtung nach Anspruch 1, wobei der Justageblock (5) einen am Justageblock befestigten Griff (5a) aufweist

3. Vorrichtung nach Anspruch 1 oder 2, wobei der Justagezylinder (4) einen Schlitz (4b) und mit dem Schlitz (4b) verbundene Einkerbungen (4a) aufweist.

4. Vorrichtung nach einem der Ansprüche 1 bis 3, wobei der Hohlkörper (3), Justagezylinder (4) und/oder Justageblock (5) ein Metall, bevorzugt Aluminium, Titan, Eisen, Chrom, Vanadium, Kobalt, Nickel, Wolfram und/oder Legierungen davon enthält.

5. Vorrichtung nach einem der Ansprüche 1 bis 4, wobei der Hohlkörper (3), oder Justageblock (5) ein Polymer, bevorzugt Polyethylen, Polypropylen, Polystyrol, Polyurethane, Polymethylmetacrylate, Polyacrylate, Polyester, Polyamide, Polyethylenterephthalat und/oder Gemische oder Copolymere davon, besonders bevorzugt Polycarbontblends wie Polycarbobnat/Polyethylenterephthalat; Polycarbonat/Acrylnitril-Butadien-Styrol; Polycarbonat/Polybutylenterephthalat enthält.

6. Vorrichtung nach einem der Ansprüche 1 bis 5, wobei die Feder (6) ein Metall, bevorzugt Aluminium, Titan, Eisen, Chrom, Vanadium, Kobalt, Nickel, Wolfram und/oder Legierungen davon, besonders bevorzugt Klavierdraht enthält.

7. Vorrichtung nach einem der Ansprüche 1 bis 6, wobei die Feder (6) eine Federkonstante mit einem Wert von 5 N/m bis 100 N/m, bevorzugt 10 N/m bis 50 N/m aufweist.

8. Vorrichtung nach einem der Ansprüche 1 bis 7, wobei die Projektilhalterung, (7) der Stopper (9) und der Entlastungsstift (13) ein Polymer, bevorzugt Polyethylen, Polypropylen, Polystyrol, Polyurethane, Polymethylmetacrylate, Polyacrylate, Polyester, Polyamide, Polyethylenterephthalat und/oder Gemische oder Copolymere davon, besonders bevorzugt Polycarbonatblends wie Polycarbonat/Polyethylenterephthalat; Polycarbonat/Acrylnitril-Butadien-Styrol; Polycarbonat/Polybutylenterephthalat enthält.

9. Vorrichtung nach einem der Ansprüche 1 bis 8, wobei die Justierkammer (12) einen Durchmesser von 0,2 cm bis 10 cm, bevorzugt 0,5 cm bis 5 cm aufweist.

10. Vorrichtung nach einem der Ansprüche 1 bis 9, wobei die Projektilkammer (10) einen Durchmesser von 0,1 cm bis 3 cm aufweist.

11. Vorrichtung nach einem der Ansprüche 1 bis 10, wobei das Projektil (8) ein Gewicht von 1 g bis 10 g, bevorzugt 2 g bis 5 g aufweist.

12. Vorrichtung nach einem der Ansprüche 1 bis 11, wobei das Projektil (8) einen konischen, zylinderförmigen oder kugelförmigen Grundkörper aufweist.

13. Vorrichtung zum Testen der Bruchbeständigkeit von Glas, umfassend eine Vorrichtung (I) nach den Ansprüchen 1 bis 12, ein Stativ (16), eine Stativbefestigung (17) und eine Scheibe (14), wobei die Vorrichtung (I) senkrecht über der Scheibe (14) mit der Befestigung (17) im Stativ (16) eingespannt ist.

14. Verfahren zur Glasbruchprüfung und zum definierten Beschuss von Glas, umfassend eine Vorrichtung (I, II) mit mindestens einem Hohlkörper (3) der in Beschleunigungsrichtung hintereinander eine Justierkammer (12) und eine Projektilkammer (10) aufweist und die Justierkammer (12) einen Justagezylinder (4) mit einem Endstück (2) und einer am Endstück (2) befestigten Justierschraube (1) mit Schraubgewinde (11) sowie einen beweglich angeordneten Justageblock (5) zur Anspannung einer Feder (6) innerhalb des Justagezylinders (4) aufweist und die Projektilkammer (10), in Beschleunigungsrichtung vor der Justierkammer (12) angeordnet, zum Ausstoßen eines Projektils (8) eine Projektilhalterung (7) mit dem Projektil (8), einen Stopper (9) mit Hohlraum sowie einen beweglichen Entlastungsstift (13) aufweist und die Projektilhalterung (7) in der Projektilkammer (10) und der Justageblock (5) in der Justierkammer (12) durch die Feder (6) miteinander verbunden sind, wobei
a. die Vorrichtung (I, II) auf eine Glasscheibe gerichtet wird,
b. eine Energie der Feder über die Position des Justagezylinders (4) sowie des Justageblocks (5) eingestellt wird und
c. das Projektil (8) durch Entfernen des Entlastungsstiftes (13) auf eine Scheibe (14) befördert wird.

15. Verwendung der Vorrichtung nach einem der Ansprüche 1 bis 13 zum definierten Beschuss von Glas, bevorzugt als Glasbruchprüfung, besonders bevorzugt als tragbare Vorrichtung zur Glasbruchprüfung.
